# EUROPÄISCHE PATENTSCHRIFT

(11) **EP 2 467 410 B1**
(45) Veröffentlichungstag und Bekanntmachung des Hinweises auf die Patenterteilung: **06.03.2013**
(21) Anmeldenummer: 10737278.1
(22) Anmeldetag: 17.07.2010
(51) Int. Cl.: C08F 220/18

(54) **STATISTISCH VERZWEIGTE COPOLYMERE, DEREN HERSTELLUNG UND VERWENDUNG ALS VERLAUFMITTEL IN BESCHICHTUNGSSTOFFEN**
RANDOMLY BRANCHED COPOLYMERS, PREPARATION THEREOF AND USE THEREOF AS LEVELLING AGENTS IN COATING SUBSTANCES
COPOLYMÈRES À RAMIFICATION STATISTIQUE, LEUR PROCÉDÉ DE PRODUCTION ET LEUR UTILISATION COMME AGENT D'ÉTALEMENT DANS DES MATIÈRES DE REVÊTEMENT

(30) Priorität: 20.08.2009 EP 09010729
(43) Veröffentlichungstag der Anmeldung: 27.06.2012
(73) Patentinhaber: BYK-Chemie GmbH, 46483 Wesel (DE)
(72) Erfinder: FRANK, Albert, 46509 Xanten (DE); NAGELSDIEK, René, 46499 Hamminkeln (DE); OMEIS, Jürgen, 46286 Dorsten (DE); GÖBELT, Bernd, 46487 Wesel (DE); JAUNKY, Wojciech, 46485 Wesel (DE)
(74) Vertreter: Leifert & Steffan
(86) Internationale Anmeldenummer: PCT/EP2010/004374
(87) Internationale Veröffentlichungsnummer: WO 2011/020533

(56) Entgegenhaltungen:
- EP-A2- 0 630 943
- JP-A- 2000 239 334

## Beschreibung

Die Erfindung betrifft statistisch verzweigte Copolymere, ein Verfahren zu ihrer Herstellung und ihre Verwendung als Verlaufmittel in Beschichtungsstoffen. Die Erfindung betrifft insbesondere Verlaufmittel auf Basis von unregelmäßig, d.h. statistisch verzweigten Copolymeren aus ethylenisch ungesättigten Monomeren, die geeignet sind, Beschichtungsstoffen, wie z. B. Lacken, eine gleichmäßige Oberfläche zu verleihen.

Lackoberflächen sind im Normalfall nicht ganz glatt, sondern weisen eine mehr oder weniger strukturierte Oberfläche auf, die als Welligkeit oder auch Orangenschalenstruktur bezeichnet wird. Diese Oberflächen können fein strukturiert mit einer kurzen Welle oder grob strukturiert mit einer langen Welle sein. In den meisten Fällen ist diese Welligkeit nicht erwünscht. Es besteht eine Abhängigkeit der Struktur von der Art der Beschichtungsstoffe, z. B. von dem Umstand, ob diese Beschichtungsstoffe Lösungsmittel enthalten oder aber lösungsmittelfrei sind, wie dies bei Pulverlacken der Fall ist. Bei Pulverlacken ist es zwingend notwendig, Verlaufmittel zuzusetzen, da ohne diese Verlaufmittel keine einigermaßen glatte Oberfläche erreicht werden kann.

Es ist bekannt, dass als verlauffördernde Mittel für Beschichtungen Poly(meth)-acrylsäureester und Polysiloxane eingesetzt werden können. Bei den Polysiloxanen handelt es sich meistens um Dimethylpolysiloxane, Methylalkylpolysiloxane oder aber auch Polyether- oder Polyester-modifizierte Dimethyl- oder Methylalkylpolysiloxane. Bei den Poly(meth)acrylaten werden bevorzugt Polymere oder Copolymere von Acrylsäurealkylestern mit einer Kettenlänge des Alkylrestes von C₂ - C₈ eingesetzt, wie z. B. Ethylacrylat, 2-Ethylhexylacrylat oder auch n-Butylacrylat verschiedener Molekulargewichte. Die verwendeten Produkte besitzen teilweise Molekulargewichte von bis zu 100.000 g/mol. Diese als verlaufsfördernde Mittel eingesetzten Poly(meth)acrylat(co)polymere können als solche, oder als Lösungen in organischen Lösungsmitteln, aber auch als auf z. B. Kieselsäure aufgebrachte Pulver eingesetzt werden. Dies ist besonders bei der Verwendung in Pulverlacken üblich. Die Einsatzmengen solcher Produkte betragen üblicherweise 0,1 - 2 % bezogen auf die Beschichtungsformulierungen.

Die Wirkung all dieser Produkte beruht auf einer Grenzflächenaktivität an der Grenzfläche flüssig/gasförmig, indem sich diese Produkte aufgrund einer gewissen Unverträglichkeit mit dem eigentlichen Bindemittel des Beschichtungssystems zur Grenzfläche orientieren. Diese Unverträglichkeit kann durch Erhöhung des Molekulargewichtes dieser Polymeren gesteigert werden. Nachteilig ist dann jedoch, dass aufgrund dieser Unverträglichkeit eine gewisse Trübung (Haze) der Beschichtung auftreten kann und die Viskosität des Verlaufmittels so hoch wird, dass eine leichte Handhabung für den Verwender nicht oder nur sehr schwer gegeben ist. Ein Ansatzpunkt zur Lösung dieser Problematik ist die Verwendung von Kammcopolymeren, die aus vorwiegend (Meth)acrylsäureestern und copolymerisierbaren Makromonomeren aufgebaut sind. EP 1 193 299 beschreibt die Verwendung dieser Kammcopolymere als Verlaufmittel. Der Nachteil dieser Kammcopolymere ist die umständliche mehrstufige Herstellung und die Verfügbarkeit der erforderlichen Makromonomere in technischen Mengen. Dies führt in einigen Fällen dazu, dass die Verlaufmittel in ihrer Polarität nicht optimal auf den Beschichtungsstoff eingestellt werden können und somit nicht der optimale Verlaufseffekt erzielt wird. Weiterhin ist die Herstellung der Makromonomeren sehr teuer, sodass auch unter dem preislichen Aspekt eine Alternative nötig ist.

### Aufgabe

Daher bestand die Aufgabe darin, Copolymere bereitzustellen, welche in einem einfachen Verfahren und in einer großen Bandbreite bei einer guten Zugänglichkeit der Rohstoffe hergestellt werden können. Die Copolymere sollen als Verlaufmittel in Beschichtungsstoffen eingesetzt werden können, wodurch es ermöglicht werden soll, sehr glatte und von Trübungen (Haze) möglichst freie Beschichtungen zu erzeugen, was besonders in Pulverlacken von größter Wichtigkeit ist.

### Lösung

Überraschenderweise wurde gefunden, dass diese Aufgabe durch ein Verfahren zur Herstellung eines statistisch verzweigten Copolymers, in dem die Komponenten
(a) 10 - 98,9 Mol-% mindestens eines Acrylsäureesters eines geradkettigen, verzweigten oder cyclischen C₁-C₂₂-Alkylmonoalkohols,
(b) 0,1 - 10 Mol-% mindestens eines mehrfach ethylenisch ungesättigten Monomers und
(c) gegebenenfalls ein oder mehrere einfach ethylenisch ungesättigte Monomere, die von Acrylsäureestern geradkettiger, verzweigter oder cyclischer C₁-C₂₂-Alkylmonoalkohole und von Verbindungen der Formel (I) verschieden sind,
   in Gegenwart von
(d) 1 - 10 Mol-% mindestens einer Verbindung der Formel (I)

   H₃C-CR^{a}R^{c}-CH₂-CR^{b}=CH₂ (I)

   mit R^{a}, R^{b} unabhängig voneinander = Aryl, CN oder COOR¹ mit R¹ = H,
   Alkyl, Aryl oder Aralkyl, und R^{c} = Alkyl, Aryl oder Aralkyl,
und in Gegenwart mindestens eines Initiators der radikalischen Polymerisation *in einer radikalischen Polymerisation* umgesetzt werden, wobei sich die angegebenen molaren Anteile der Komponenten (a), (b), (c) und (d) zu 100 Mol-% ergänzen und wobei der molare Anteil der Komponente (b) den molaren Anteil der Komponente (d) nicht übersteigt, gelöst werden kann.

Nach diesem Verfahren erhaltene statistisch verzweigte Copolymere können als Verlaufmittel in Beschichtungsstoffen, insbesondere auch in Pulverlacken, eingesetzt werden, wodurch es ermöglicht wird, sehr glatte und von Trübungen (Haze) möglichst freie Beschichtungen zu erzeugen. Das Herstellverfahren ist ein einfaches einstufiges Verfahren, welches die unkomplizierte Herstellung einer relativ großen Bandbreite von Copolymeren aus gut zugänglichen Ausgangsstoffen ermöglicht.

Die Darstellung von stark verzweigten Copolymeren mittels radikalischer Polymerisation ist in verschiedenen Fachartikeln, wie in dem Übersichtsartikel Progress in Polymer Science 34 (2009), 317, oder in US 7,423,104 beschrieben.

Beispielsweise ist eine Herstellvariante für stark verzweigte Copolymere die *"selfcondensing vinyl polymerization" (SCVP)* mit AB*-Monomeren, welche ethylenisch ungesättigte Monomere sind, die eine Gruppe tragen, welche unter den gegebenen Polymerisationsbedingungen als ein Radikalinitiator wirkt und kettenverlängert wird. Dieser Ansatz wird in Chem. Rev. 2001, 101, Seite 3681 ff. für die *Nitroxyl Mediated Polymerization (NMP)* und in Chem. Rev. 2001, 101, Seite 2981 ff. für die *Atom Transfer Radical Polymerization (ATRP),* WO 2008/045299 oder in US 6,639,032 beschrieben. In diesen Übersichtsartikeln werden auch Beispiele für AB*-Monomere genannt.

Eine andere Synthesestrategie zu stark verzweigten Polymeren wird in Chem. Rev. 2001, 101; Seite 3643 ff. und J. Polym Sci, Part A, 2000, 38, 1764 ff. beschrieben. Es wurde herausgefunden, dass unter gewissen Umständen bei der *Catalytic Chain Transfer (CCT) -* und bei der *Reversible Addition Fragmentation Chain Transfer-Polymerization* stark verzweigte Polymere aufgebaut werden. Die Generation von Verzweigungen kann als das Einpolymerisieren von in situ generierten Makromonomeren angesehen werden. Hierbei entstehen nicht Kammcopolymere mit einer Hauptkette und Seitenketten, sondern dadurch, dass zu jedem Zeitpunkt der Polymerisation ein in situ erzeugtes Makromonomer einpolymerisieren kann, können die Seitenketten ihrerseits wiederum verzweigt sein. US 5,767,211 beschreibt die Herstellung von stark verzweigten Polymeren aus di- oder trifunktionellen Monomeren mit monofunktionellen Monomeren in Gegenwart eines Cobalt-Katalysators mittels CCT.

EP 1 694 790 beschreibt die Verwendung von Copolymeren aus einfach und mehrfach ethylenisch ungesättigten Monomeren, die mit NMP hergestellt werden, als Verlaufmittel.

In Patent JP 2000/239334 wird die Darstellung eines Sterncopolymers in einem zweistufigen Prozess mittels α-Methylstyroldimer und polyfunktionellen Monomeren beschrieben.

WO 99/46301 beschreibt die Herstellung von verzweigten Polymeren aus mono- und multifunktionellen ethylenisch ungesättigten Monomeren mit Hilfe von Kettentransferverbindungen, die das Molekulargewicht erniedrigen.

JP 2008/247978 zeigt einen Syntheseweg zu verzweigten Polymeren, die noch ethylenisch ungesättigte Gruppen zur Einvernetzung in die aushärtende Bindemittelmatrix tragen. Das Vorhandensein von ethylenisch ungesättigten Gruppen im Verlaufmittel ist nicht gewünscht, da sie durch die Einvernetzung in das aushärtende Bindemittel nicht mehr an die Grenzfläche zur Luft aufschwimmen können.

### Ausführliche Beschreibung

In dem erfindungsgemäßen Verfahren werden die Komponenten
(a) 10 - 98,9 Mol-% mindestens eines Acrylsäureesters eines geradkettigen, verzweigten oder cyclischen C₁-C₂₂-Alkylmonoalkohols,
(b) 0,1 - 10 Mol-% mindestens eines mehrfach ethylenisch ungesättigten Monomers und
(c) gegebenenfalls ein oder mehrere einfach ethylenisch ungesättigte Monomere, die von Acrylsäureestern geradkettiger, verzweigter oder cyclischer C₁-C₂₂-Alkylmonoalkohole und von Verbindungen der Formel (I) verschieden sind,
   in Gegenwart von
(d) 1 - 10 Mol-% mindestens einer Verbindung der Formel (I)

   H₃C-CR^{a}R^{c}-CH₂-CR^{b}=CH₂ (I)

   mit R^{a}, R^{b} unabhängig voneinander = Aryl, CN oder COOR¹ mit R¹ = H,
   Alkyl, Aryl oder Aralkyl, und R^{c} = Alkyl, Aryl oder Aralkyl,
und in Gegenwart mindestens eines Initiators der radikalischen Polymerisation *in einer radikalischen Polymerisation* umgesetzt, wobei sich die angegebenen molaren Anteile der Komponenten (a), (b), (c) und (d) zu 100 Mol-% ergänzen und wobei der molare Anteil der Komponente (b) den molaren Anteil der Komponente (d) nicht übersteigt.

Bevorzugt beträgt der molare Anteil der Komponente (a) 25 - 98,8 Mol-%, besonders bevorzugt 40 - 98,8 Mol-%, jeweils bezogen auf die Summe der eingesetzten Komponenten (a), (b), (c) und (d).

Bevorzugt beträgt der molare Anteil der Komponente (b) 0,1 - 5 Mol-%, bezogen auf die Summe der eingesetzten Komponenten (a), (b), (c) und (d).

Die Komponente (c) ist nur optional enthalten, d.h. der molare Anteil der Komponente (c) kann 0 Mol-% betragen. Bevorzugt beträgt der molare Anteil der Komponente (c) 0,1 - 50 Mol-%, bezogen auf die Summe der eingesetzten Komponenten (a), (b), (c) und (d).

Bevorzugt beträgt der molare Anteil der Komponente (d) 1 - 5 Mol-%, bezogen auf die Summe der eingesetzten Komponenten (a), (b), (c) und (d).

Als Komponente (a) wird mindestens ein Acrylsäureester eines geradkettigen, verzweigten oder cyclischen C₁-C₂₂-Alkylmonoalkohols eingesetzt. Ester der Methacrylsäure sind ausdrücklich ausgeschlossen. Die zur Veresterung der Acrylsäure eingesetzten geradkettigen, verzweigten oder cyclischen C₁-C₂₂-Alkylmonoalkohole sind aliphatisch, gesättigt und monohydroxyfunktionell und tragen außer der Hydroxylgruppe keine weiteren funktionellen Gruppen. Beispiele für die Acrylsäureester geradkettiger, verzweigter oder cyclischer C₁-C₂₂-Alkylmonoalkohole der Komponente (a) sind Methylacrylat, Ethylacrylat, n-Propylacrylat, n-Butylacrylat, i-Butylacrylat, Hexylacrylat, Cyclohexylacrylat, 2-Ethylhexylacrylat, Laurylacrylat, Stearylacrylat und Behenylacrylat.

Als Komponente (b) wird mindestens ein mehrfach ethylenisch ungesättigtes Monomer eingesetzt. Mehrfach ethylenisch ungesättigte Monomere der Komponente (b) tragen zwei oder mehrere ethylenisch ungesättigte Gruppen, bevorzugt zwei oder drei ethylenisch ungesättigte Gruppen, besonders bevorzugt zwei ethylenisch ungesättigte Gruppen. Beispiele für mehrfach ungesättigte Monomere sind Divinylbenzol, N,N'-Bisacryloyl-1,2-diaminoethan, Ethylenglycoldimethacrylat, Ethylenglycoldiacrylat, 1,6-Hexandioldiacrylat, Trimethylolpropantrimethacrylat, Polyethylenglycoldiacrylat, Polyethylenglycoldimethacrylat, Polypropylenglycoldiacrylat, Polypropylenglycoldimethacrylat oder mit Acrylat- oder Methacrylatgruppen funktionalisierte Polydimethylsiloxane.

Als Komponente (c) werden gegebenenfalls ein oder mehrere einfach ethylenisch ungesättigte Monomere, die von Acrylsäureestern geradkettiger, verzweigter oder cyclischer C₁-C₂₂-Alkylmonoalkohole und von Verbindungen der Formel (I) verschieden sind, eingesetzt. Beispiele für Monomere der Komponente (c) sind (hierbei schließt die Schreibweise (Meth)acrylat Acrylate und Methacrylate ein): Methacrylsäureester von geradkettigen oder verzweigten Alkoholen mit 1 bis 22 C-Atomen wie Methylmethacrylat, Ethylmethacrylat, n- und i-Butylmethacrylat, Laurylmethacrylat, 2-Ethylhexylmethacrylat, Stearylmethacrylat, Behenylmethacrylat; cycloaliphatische Methacrylate wie z. B. Cyclohexylmethacrylat und Isobornylmethacrylat; Aralkyl(meth)acrylate wie z.B. Benzyl(meth)acrylat; Itaconsäureester und Maleinsäureester mit vorgenannten Alkyl-, Cycloalkyl- oder Aralkylgruppen.

Als funktionelle Monomere der Komponente (c) können beispielsweise hydroxyfunktionelle oder carboxyfunktionelle Monomere eingesetzt werden, z.B. einfach ethylenisch ungesättigte Polyester aus (Meth)acrylsäure und Caprolacton. Um eine Vernetzung der resultierenden hydroxyfunktionellen Verlaufmittel mit z. B. Acryl-Melamin-Formaldehydharzen zu ermöglichen, ist es auch möglich, diese Hydroxylgruppen teilweise oder ganz mit Isocyanaten zu sekundären Carbamat-Gruppen umzusetzen, so dass bei der Vernetzung des Gesamtsystems dem Verlaufmittel genügend Zeit verbleibt, sich an der Grenzfläche zu orientieren, seine Wirkung dort zu entfalten und nach einer gewissen Zeitverzögerung mit dem Melaminformaldehydharz zu reagieren.

Als weitere Beispiele für funktionelle Monomere der Komponente (c) seien genannt: Acrylsäure, Methacrylsäure, Maleinsäure, Maleinsäureanhydrid, Fumarsäure und Itakonsäure;

Hydroxyalkyl(meth)acrylate von geradkettigen, verzweigten oder cycloaliphatischen Diolen mit 2 bis 36 C-Atomen, wie zum Beispiel 3-Hydroxypropylmethacrylat, 3,4-Dihydroxybutylmethacrylat, 2-Hydroxyethyl(meth)acrylat, 4-Hydroxybutyl(meth)-acrylat, 2-Hydroxypropylmethacrylat, 2,5-Dimethyl-1,6-hexandiolmonomethacrylat;

(Meth)acrylate von Ethern, Polyethylenglykolen, Polypropylenglykolen oder gemischten Polyethylen/propylenglykolen mit 5 bis 80 C-Atomen, wie zum Beispiel Tetrahydrofurfurylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2- Butoxyethylmethacrylat, 2-Ethoxyethoxymethylmethacrylat, 2-Ethoxyethylmethacrylat, 1-Ethoxybutylmethacrylat, Methoxymethylmethacrylat, 1-Ethoxyethylmethacrylat, Ethoxymethylmethacrylat, Poly(ethylenglycol)methylether(meth)acrylat, Poly(propylenglycol)methylether(meth)acrylat;

Glycidoxipropylmethacrylat;

Caprolacton- und/oder Valerolacton-modifizierte Hydroxyalkyl(meth)acrylate mit einem mittleren Molekulargewicht von 220 bis 1200 g/mol, wobei die Hydroxy(meth)acrylate bevorzugt von geradkettigen, verzweigten oder cycloaliphatischen Diolen mit 2 bis 8 C-Atomen abgeleitet sind;

sowie weitere einfach ethylenisch ungesättigte Monomere, die zur Copolymerisation geeignet sind, z. B. Styrol, α-Methylstyrol, Acrylnitril und Vinylether wie Ethylvinylether, Butylvinylether und Cyclohexylvinylether.

Um die Oberflächenspannung der Copolymeren drastisch zu erniedrigen, ist es vorteilhaft, geringe Anteile eines mit einer Acrylat- oder Methacrylatgruppe funktionalisierten Polydimethylsiloxans, Perfluoralkyl(meth)acrylats oder eines Umsetzungsproduktes von Perfluoralkylalkoholen mit Maleinsäure, Maleinsäureanhydrid oder Fumarsäure mit einzupolymerisieren.

Die o. a. ethylenisch ungesättigten Monomere können einzeln oder in Kombination polymerisiert werden, in Abhängigkeit von der gewünschten Bindemittelverträglichkeit.

Die mit polyalkoxylierten Monomeren oder mit (Meth)Acrylsäure copolymerisierten Polymeren können in wässrigen Bindemittelsystemen als Verlaufmittel eingesetzt werden. Besonders empfiehlt es sich bei den sauer modifizierten Produkten, diese vor dem Einsatz mit geeigneten Aminen wie z. B. Triethylamin, Dimethylethanolamin oder Aminomethylpropanol zu versalzen.

Als Komponente (d) wird mindestens eine Verbindung der Formel (I)

H₃C-CR^{a}R^{c}-CH₂-CR^{b}=CH₂ (I)

mit R^{a}, R^{b} unabhängig voneinander = Aryl, CN oder COOR¹ mit R¹ = H,
Alkyl, Aryl oder Aralkyl, und R^{c} = Alkyl, Aryl oder Aralkyl
eingesetzt. Beispiele für Verbindungen der Formel (I) sind 2,4-Dicyanopent-1-en, 2,4-Dicyano-4-methylpent-1-en, 2,4-Diphenyl-4-methylpent-1-en, 2-Cyano-4-methyl-4-phenylpent-1-en, 2,2-Dimethyl-4-methylenpentan-1,5-disäuredimethylester und 2,2-Dimethyl-4-methylenpentan-1,5-disäuredibutylester. Bevorzugt wird in der Komponente (d) 2,4-Diphenyl-4-methylpent-1-en eingesetzt.

Die Herstellung der statistisch verzweigten Polymere durch radikalische Polymerisation erfolgt in Gegenwart mindestens eines Initiators der radikalischen Polymerisation, wie z.B. Peroxiden oder Azoverbindungen, in dem Fachmann bekannter Weise. Als Lösemittel kommen insbesondere Ester wie z. B. Ethylacetat, n-Butylacetat oder 1-Methoxy-2-propylacetat sowie aromatische Lösemittel, wie z. B. Toluol oder Xylol und Ketone, wie z. B. Methylisobutylketon oder Methylethylketon, in Frage. Die Wahl des Lösemittels oder der Lösemittelmischung richtet sich auch nach dem späteren Einsatzzweck des erfindungsgemäßen Polymeren. Bevorzugt werden niedrigsiedende Lösemittel eingesetzt, um das Abdestillieren dieser Lösemittel zu erleichtern bei Anwendungen, in denen die erfindungsgemäßen Polymere als 100 %-iges Produkt eingesetzt werden sollen, wie z. B. in UV-härtenden Lacksystemen oder in Polymeren.

Die radikalische Polymerisation wird bei Temperaturen von ca. 40°C bis 200°C, bevorzugt bei 60°C bis 180°C, besonders bevorzugt bei 80°C bis 160°C durchgeführt.

Die radikalische Polymerisation kann beispielsweise als Massepolymerisation, als Lösungspolymerisation, als Fällungspolymerisation, als Emulsionspolymerisation oder als Suspensionspolymerisation durchgeführt werden.

Die Herstellung der Polymere erfolgt in einem einstufigen Verfahren, in dem entweder die Monomere der Komponenten (a), (b) und gegebenenfalls (c), der mindestens eine Initiator und die Verbindung(en) der Komponente (d) gemeinsam zudosiert werden oder die Verbindung(en) der Komponente (d) vorgelegt und eine Mischung der Monomere der Komponenten (a), (b) und gegebenenfalls (c) und der mindestens eine Initiator hinzudosiert werden. Hierbei entstehen Copolymere mit einem statistischen Aufbau. Unter einem statistischen Aufbau wird ein Aufbau des Polymers mit einer unregelmäßigen, zufälligen Abfolge der Monomereinheiten verstanden, der sich von einem blockartigen, einem gepfropften und einem alternierenden Aufbau unterscheidet. Insbesondere sind die Verzweigungspunkte statistisch im Copolymer verteilt. Es entsteht also ein statistisch verzweigtes Copolymer in einem einstufigen Verfahren.

Ein weiterer Gegenstand der Erfindung sind statistisch verzweigte Copolymere, die nach dem beschriebenen Verfahren erhältlich sind.

Das zahlenmittlere Molekulargewicht der erfindungsgemäßen Copolymere liegt im Bereich von 1500 bis 200000 g/mol, bevorzugt 5000 bis 75000 g/mol, besonders bevorzugt im Bereich von 7500 bis 50000 g/mol. Das zahlenmittlere Molekulargewicht der Copolymere wird mittels Gelpermeationschromatographie mit Tetrahydrofuran (1 ml/min) als Elutionsmittel und unter Verwendung von Polystyrol-Standards bestimmt.

Die Copolymere können durch polymeranaloge Reaktionen noch nachträglich modifiziert werden. Beispielsweise kann durch die nachträgliche Reaktion mit Maleinsäureanhydrid eine reaktive Doppelbindung und Säurefunktion mit eingebaut werden. Diese Säurefunktion kann zur besseren Wasserlöslichkeit auch z. B. mit Triethanolamin versalzen werden. Auch können freie OH-Gruppen durch z. B. nachträgliche Umsetzung mit Essigsäureanhydrid verestert werden, um bei Anwendung der erfindungsgemäßen Polymere als Verlaufshilfsmittel in Lacken potentielle Zwischenschichthaftungsprobleme besser vermeiden zu können.

Ein weiterer Gegenstand der Erfindung ist die Verwendung eines oben beschriebenen Copolymers als Verlaufmittel in einem Beschichtungsstoff. Ein weiterer Gegenstand der Erfindung ist ein Beschichtungsstoff, der ein erfindungsgemäßes Copolymer enthält. Ein weiterer Gegenstand der Erfindung ist ein Verlaufmittel, das ein erfindungsgemäßes Copolymer enthält und für den Zusatz in einem Beschichtungsstoff vorgesehen ist. Hierbei kann das Verlaufmittel neben der verlaufsfördernden Wirkung auch weitere Oberflächeneigenschaften des Beschichtungsmittels beeinflussen, wie zum Beispiel die Beschichtungsstoffoberfläche hydrophob, hydrophil, kratzbeständiger, anti-adhäsiv oder schmutzabweisend ausstatten oder den Slip (Oberflächenglätte) erhöhen.

Unter Beschichtungsstoffen werden flüssige, pastenförmige oder pulverförmige Produkte verstanden, die, auf ein Substrat aufgetragen, eine Beschichtung mit schützenden, dekorativen und/oder anderen spezifischen Eigenschaften ergibt; insbesondere Anstriche und Lackierungen. Beispiele für Beschichtungsstoffe sind insbesondere pigmentierte und nicht-pigmentierte Lacke, die organische Lösemittel und/oder Wasser enthalten können oder davon frei sein können (Pulverlacke). Besonders bevorzugt handelt es sich bei den Beschichtungsstoffen um Pulverlacke, d.h. pulverförmige Beschichtungsstoffe.

Unter Verlaufmitteln werden Lösungen, Emulsionen, 100%-Formulierungen oder sonstige Formulierungen von solchen Substanzen verstanden, die das Fließverhalten eines Beschichtungsstoffes auf einem Substrat verbessern. Die erfindungsgemäßen Verlaufmittel können neben dem oder den erfindungsgemäßen Copolymeren insbesondere noch einen oder mehrere Zusatzstoffe, ausgewählt aus der Gruppe bestehend aus organischen Lösemitteln, Wasser, anorganischen Trägerstoffen, Konservierungsmitteln und Emulgatoren enthalten.

Zur Verwendung der beschriebenen Copolymere zur Verlaufsverbesserung in einem Beschichtungsstoff werden die Copolymere dem Beschichtungsstoff in relativ geringen Mengen von 0,01 bis 5 Gew.-%, bevorzugt 0,05 bis 2 Gew.-%, ganz besonders bevorzugt 0,1 bis 1 Gew.-%, jeweils bezogen auf den gesamten Beschichtungsstoff, eingesetzt. Die Copolymere können in Form des Verlaufmittels als Lösungen, Emulsionen, sonstige Formulierung oder auch als 100%-ige Stoffe eingesetzt werden, abhängig von der Art und Applikationsweise des Beschichtungsstoffes. In lösungsmittelhaltigen Lacken werden bevorzugt Verlaufmittel eingesetzt, die in ähnlichen Lösemitteln angelöst sind wie die Lacke selbst. In strahlenhärtenden Systemen werden die Verlaufmittel bevorzugt in entsprechenden Monomeren angelöst. In Pulverlacken bevorzugt man eine 100%-ige Version des Verlaufmittels bzw. eine auf pulverförmigem Trägermaterial aufgebrachte Form dieser Verlaufmittel. Auch können diese Verlaufmittel gemäß der deutschen Patentschrift 19 522 475 in Wachsschmelzen eingearbeitet werden und auf diese Art und Weise in rieselfähige feste Formen überführt werden, wenn die erfindungsgemäßen Verlaufmittel viskose, klebrige Harze darstellen. In wässrigen Pulverslurrys, einer Abart der Pulverlackierung, können die Verlaufmittel als wässrige Emulsion zugesetzt werden. Diese Emulsionen werden dem Stand der Technik gemäß mit Hilfe von Emulgatoren hergestellt.

### Beispiele

### Herstellung der erfindungsgemäßen Polymere

### Beispiel 1

In einem mit Rührer, Thermometer, Rückflusskühler, Tropftrichter und Stickstoffeinleitungsrohr versehenen Glaskolben wird 100 g Isobutanol vorgelegt. Während der gesamten Reaktion wird Stickstoff übergeleitet. Nach Erhöhung der Reaktionstemperatur auf 110°C wird innerhalb eines Zeitraumes von 150 Minuten eine Mischung aus 7,6 g 2,2'-Azodi(2-methylbutyronitril), 9,3 g 2,4-Diphenyl-4-methylpent-1-en, 151,6 g n-Butylacrylat, 28,5 g Acrylsäure und 4,7 g Tripropylenglykoldiacrylat gleichmäßig zudosiert. Nach Abschluss der Zugabe hält man die Reaktionstemperatur noch 120 Minuten bei 110°C. Danach werden 3 mal jeweils 0,5 g 2,2'-Azodi(2-methylbutyronitril) im 30-Minuten-Takt hinzugeben. Nach Abschluss der Zugabe hält man die Reaktionstemperatur noch 120 Minuten bei 110°C.

Anschließend wird das verwendete Lösemittel am Rotationsverdampfer unter Vakuum abdestilliert. Der Festkörper beträgt > 98 %.

### Beispiel 2

In einem mit Rührer, Thermometer, Rückflusskühler, Tropftrichter und Stickstoffeinleitungsrohr versehenen Glaskolben wird 100 g Isobutanol vorgelegt. Während der gesamten Reaktion wird Stickstoff übergeleitet. Nach Erhöhung der Reaktionstemperatur auf 110°C wird innerhalb eines Zeitraumes von 150 Minuten eine Mischung aus 7,6 g 2,2'-Azodi(2-methylbutyronitril), 18,6 g 2,4-Diphenyl-4-methylpent-1-en, 151,6 g n-Butylacrylat, 28,5 g Acrylsäure und 4,7 g Tripropylenglykoldiacrylat gleichmäßig zudosiert. Nach Abschluss der Zugabe hält man die Reaktionstemperatur noch 120 Minuten bei 110°C. Danach werden 3 mal jeweils 0,5 g 2,2'-Azodi(2-methylbutyronitril) im 30-Minuten-Takt hinzugeben. Nach Abschluss der Zugabe hält man die Reaktionstemperatur noch 120 Minuten bei 110°C.

Anschließend wird das verwendete Lösemittel am Rotationsverdampfer unter Vakuum abdestilliert. Der Festkörper beträgt > 98 %.

### Beispiel 3

In einem mit Rührer, Thermometer, Rückflusskühler, Tropftrichter und Stickstoffeinleitungsrohr versehenen Glaskolben werden 5 g 2,4-Diphenyl-4-methylpent-1-en und 41,6 g 1-Methoxy-2-propylacetat vorgelegt. Während der gesamten Reaktion wird Stickstoff übergeleitet. Nach Erhöhung der Reaktionstemperatur auf 120°C wird innerhalb eines Zeitraumes von 120 Minuten eine Mischung aus 4 g 2,2'-Azodi(2-methylbutyronitril), 51,6 g n-Butylacrylat und 1,6 g 1,6-Hexandioldiacrylat gleichmäßig zudosiert. Nach Abschluss der Zugabe hält man die Reaktionstemperatur noch 120 Minuten bei 120°C.

Der Festkörper beträgt 60%.

### Beispiel 4

In einem mit Rührer, Thermometer, Destillationsaufsatz, Tropftrichter und Stickstoffeinleitungsrohr versehenen Glaskolben werden 5 g 2,4-Diphenyl-4-methylpent-1-en und 41,6 g 1-Methoxy-2-propylacetat vorgelegt. Während der gesamten Reaktion wird Stickstoff übergeleitet. Nach Erhöhung der Reaktionstemperatur auf 120°C wird innerhalb eines Zeitraumes von 120 Minuten eine Mischung aus 4 g 2,2'-Azodi(2-methylbutyronitril), 25,8 g n-Butylacrylat, 25,8 g i-Butylacrylat und 1,6 g 1,6-Hexandioldiacrylat gleichmäßig zudosiert. Nach Abschluss der Zugabe hält man die Reaktionstemperatur noch 120 Minuten bei 120°C.

Der Festkörper beträgt 60%.

### Beispiel 5

In einem mit Rührer, Thermometer, Rückflusskühler, Tropftrichter und Stickstoffeinleitungsrohr versehenen Glaskolben wird 100 g Isobutanol vorgelegt. Während der gesamten Reaktion wird Stickstoff übergeleitet. Nach Erhöhung der Reaktionstemperatur auf 110°C wird innerhalb eines Zeitraumes von 180 Minuten eine Mischung aus 1,2 g 2,2'-Azodi(2-methylbutyronitril), 3 g 2,4-Diphenyl-4-methylpent-1-en, 74,8 g 2-Ethylhexylacrylat, 103 g BISOMER^{®} MPEG550MA (Monomethylpolyethylenglykolmethacrylsäureester der Firma Cognis mit einem zahlenmittleren Molekulargewicht von 628 g/mol), 2,25 g Acrylsäure und 0,6 g Tripropylenglykoldiacrylat gleichmäßig zudosiert. Nach Abschluss der Zugabe hält man die Reaktionstemperatur noch 120 Minuten bei 110°C. Danach werden 3 mal jeweils 0,5 g 2,2'-Azodi(2-methylbutyronitril) im 30-Minuten-Takt hinzugeben. Nach Abschluss der Zugabe hält man die Reaktionstemperatur noch 120 Minuten bei 110°C.

Anschließend wird das verwendete Lösemittel am Rotationsverdampfer unter Vakuum abdestilliert. Der Festkörper beträgt > 98 %.

### Beispiel 6

In einem mit Rührer, Thermometer, Rückflusskühler, Tropftrichter und Stickstoffeinleitungsrohr versehenen Glaskolben werden 5 g 2,4-Diphenyl-4-methylpent-1-en und 41,6 g 1-Methoxy-2-propylacetat vorgelegt. Während der gesamten Reaktion wird Stickstoff übergeleitet. Nach Erhöhung der Reaktionstemperatur auf 120°C wird innerhalb eines Zeitraumes von 120 Minuten eine Mischung aus 4 g 2,2'-Azodi(2-methylbutyronitril), 51,6 g n-Butylacrylat und 10g diacrylatfunktionallisiertem Polydimethylsiloxan AB 172305 (Hersteller: ABCR, Mₙ = ca. 1400 g/mol) gleichmäßig zudosiert. Nach Abschluss der Zugabe hält man die Reaktionstemperatur noch 120 Minuten bei 120°C.

Der Festkörper beträgt 60%.

### Vergleichspolymere

### Vergleich 1 (ohne Komponenten (b) und (d))

In einem mit Rührer, Thermometer, Rückflusskühler, Tropftrichter und Stickstoffeinleitungsrohr versehenen Glaskolben wird 100 g Isobutanol vorgelegt. Während der gesamten Reaktion wird Stickstoff übergeleitet. Nach Erhöhung der Reaktionstemperatur auf 110°C wird innerhalb eines Zeitraumes von 150 Minuten eine Mischung aus 7,6 g 2,2'-Azodi(2-methylbutyronitril), 151,6 g n-Butylacrylat und 28,5 g Acrylsäure gleichmäßig zudosiert. Nach Abschluss der Zugabe hält man die Reaktionstemperatur noch 270 Minuten bei 110°C. Danach werden 3 mal jeweils 0,5 g 2,2'-Azodi(2-methylbutyronitril) im 30-Minuten-Takt hinzugeben. Nach Abschluss der Zugabe hält man die Reaktionstemperatur noch 120 Minuten bei 110°C. Anschließend wird das verwendete Lösemittel am Rotationsverdampfer unter Vakuum abdestilliert. Der Festkörper beträgt > 98 %.

### Vergleich 2 (mit Komponente (d), ohne Komponente (b))

In einem mit Rührer, Thermometer, Rückflusskühler, Tropftrichter und Stickstoffeinleitungsrohr versehenen Glaskolben wird 100 g Isobutanol vorgelegt. Während der gesamten Reaktion wird Stickstoff übergeleitet. Nach Erhöhung der Reaktionstemperatur auf 110°C wird innerhalb eines Zeitraumes von 150 Minuten eine Mischung aus 7,6 g 2,2'-Azodi(2-methylbutyronitril), 9,3 g 2,4-Diphenyl-4-methylpent-1-en, 151,6 g n-Butylacrylat und 28,5 g Acrylsäure gleichmäßig zudosiert. Nach Abschluss der Zugabe hält man die Reaktionstemperatur noch 270 Minuten bei 110°C. Danach werden 3 mal jeweils 0,5 g 2,2'-Azodi(2-methylbutyronitril) im 30-Minuten-Takt hinzugeben. Nach Abschluss der Zugabe hält man die Reaktionstemperatur noch 120 Minuten bei 110°C.

Anschließend wird das verwendete Lösemittel am Rotationsverdampfer unter Vakuum abdestilliert. Der Festkörper beträgt > 98 %.

### Vergleich 3 (ohne Komponenten (b) und (d))

In einem mit Rührer, Thermometer, Rückflusskühler, Tropftrichter und Stickstoffeinleitungsrohr versehenen Glaskolben wird 119 g Isobutanol vorgelegt. Während der gesamten Reaktion wird Stickstoff übergeleitet. Nach Erhöhung der Reaktionstemperatur auf 110°C wird innerhalb eines Zeitraumes von 180 Minuten eine Mischung aus 1,2 g 2,2'-Azodi(2-methylbutyronitril), 74,8 g 2-Ethylhexylacrylat, 103 g BISOMER^{®} MPEG550MA und 2,25 g Acrylsäure gleichmäßig zudosiert. Nach Abschluss der Zugabe hält man die Reaktionstemperatur noch 120 Minuten bei 110°C. Danach werden 3 mal jeweils 0,1 g 2,2'-Azodi(2-methylbutyronitril) im 30-Minuten-Takt hinzugeben. Nach Abschluss der Zugabe hält man die Reaktionstemperatur noch 120 Minuten bei 110°C.

Anschließend wird das verwendete Lösemittel am Rotationsverdampfer unter Vakuum abdestilliert. Der Festkörper beträgt > 98 %.

### Vergleich 4 (mit Komponente (d), ohne Komponente (b))

In einem mit Rührer, Thermometer, Rückflusskühler, Tropftrichter und Stickstoffeinleitungsrohr versehenen Glaskolben wird 118 g Isobutanol vorgelegt. Während der gesamten Reaktion wird Stickstoff übergeleitet. Nach Erhöhung der Reaktionstemperatur auf 110°C wird innerhalb eines Zeitraumes von 180 Minuten eine Mischung aus 1,2 g 2,2'-Azodi(2-methylbutyronitril), 1,5 g 2,4-Diphenyl-4-methylpent-1-en, 74,8 g 2-Ethylhexylacrylat, 103 g BISOMER^{®} MPEG550MA und 2,25 g Acrylsäure gleichmäßig zudosiert. Nach Abschluss der Zugabe hält man die Reaktionstemperatur noch 120 Minuten bei 110°C. Danach werden 3 mal jeweils 0,5 g 2,2'-Azodi(2-methylbutyronitril) im 30-Minuten-Takt hinzugeben. Nach Abschluss der Zugabe hält man die Reaktionstemperatur noch 120 Minuten bei 110°C. Anschließend wird das verwendete Lösemittel am Rotationsverdampfer unter Vakuum abdestilliert. Der Festkörper beträgt > 98 %.

### Vergleich 5 (lineares Polymer): Acronal 4F = Poly-n-butylacrylat, BASF, Ludwigshafen

### Vergleich 6 (Kammcopolymer): Beispiel 10 aus EP 1 193 299 A2.

### Verwendung als Verlaufmittel in Beschichtungsstoffen

### 1. Wässriger Polyurethan-Dispersionslack

| | | |
|---|---|---|
| Liopur 2004-119 | 34,70 g | Polyurethandispersion, Hersteller Synthopol |
| BYK 425 (10% in Wasser) | 0,30 g | Rheologiesteuerungsmittel, Hersteller Byk |
| Wasser | 6,65 g | |
| Butylglycol | 5,95 g | |
| BYK-093 | 0,40 g | Entschäumer, Hersteller Byk |
| Liocryl AS-680 | 52,00g | Styrol-Acrylat-Dispersion von Synthopol |
| | 100,00 g | |

Die Lacke wurden hergestellt und die Verlaufmittel (siehe untenstehende Tabelle) 3 Minuten mit einem Dissolver (1865 U/min) eingearbeitet. Nach Lagerung der Lacke über 24 h wurden folgende Prüfungen durchgeführt:
Aufpinseln auf versiegelte Kontastkarten (Chart2813) und visuelle Beurteilung von Schaum und Verlauf.

| Verlaufmittel | Menge [g] | Prüfung | |
|---|---|---|---|
| | | Schaum* | Verlauf** |
| ohne Verlaufmittel | - | 2 | 5 |
| Vergleich 1 | 0,1 | 2 | 4 |
| Vergleich 2 | 0,1 | 2 | 4 |
| Beispiel 1 | 0,1 | 1-2 | 4 |
| Beispiel 2 | 0,1 | 1-2 | 1 |

| | | | |
|---|---|---|---|
| * 1 = kein Schaum; 5 = viel Schaum; ** 1 = guter Verlauf; 5 = schlechter Verlauf | | | |

### 2. Wässriger Polyacrylat-Dispersionslack

| | | |
|---|---|---|
| Joncryl 8226 | 89,70 g | wässrige Polyacrylatemulsion (BASF) |
| BYK-425 (10% in Wasser) | 0,50 g | |
| Dowanol PnB | 1,80 g | Butoxypropanol , Hersteller Dow |
| Texanol | 3,50 g | Coalescenzmittel, Hersteller Eastman |
| Wasser | 4,10 g | |
| BYK-028 | 0,40 g | Entschäumer, Hersteller Byk Chemie |
| | 100,00 g | |

Die Lacke wurden hergestellt und die Verlaufmittel (siehe untenstehende Tabelle) 3 Minuten mit einem Dissolver (1865 U/min) eingearbeitet. Nach Lagerung der Lacke über 24 h wurden folgende Prüfungen durchgeführt:
Aufpinseln auf versiegelte Kontastkarten (Chart2813) und visuelle Beurteilung von Schaum und Verlauf.

| Verlaufmittel | Menge [g] | Prüfung | |
|---|---|---|---|
| | | Schaum* | Verlauf** |
| ohne Verlaufmittel | - | 2 | 4 |
| Vergleich 1 | 0,1 | 2 | 5 |
| Beispiel 2 | 0,1 | 1 | 2 |

| | | | |
|---|---|---|---|
| * 1= kein Schaum; 5 = viel Schaum; ** 1 = guter Verlauf; 5 = schlechter Verlauf | | | |

### 3. Lösemittel-haltiger weißer Polyester/Melamin-Einbrennlack

### Mahlgut

| | | |
|---|---|---|
| Uralac SN 831 | 16,7 g | Polyesterbindemittel, Hersteller DSM |
| Methoxypropylacetat | 5 g | |
| Disperbyk 174 | 0,9 g | Netz- und Dispergiermittel, Hersteller Byk |
| Byk-057 | 0,5 g | Entschäumer, Hersteller Byk |
| Aerosil R972 | 0,3 g | pyrogene Kieselsäure, Hersteller Degussa |
| Ti-pure R 960 | 30 g | Titandioxid, Hersteller DuPont |

Dispergierung: Dispermat CV; 20 Min; 8000 U/min; 40°C; Mahlgut:Glasperlen 1:1

### Auflackgut

| | | |
|---|---|---|
| Uralac SN 831 | 33,3 g | |
| Cymel 303 | 7,5 g | Melaminderivat, Hersteller Cytec |
| Dynapol Catalyst 1203 | 1,9 g | geblocktes Sulfonsäurederivat (Evonik) |
| Solvesso 150 | 2,1 g | Lösemittel, Hersteller ExxonMobil |
| Butyldiglycolacetat | 1,8 g | |

Copolymer/Verlaufmittel 0,3 respektive 0,7 g gemäß untenstehender Tabelle, jeweils berechnet auf den Festkörper des Verlaufmittels (d.h. die eingesetzte Menge des Verlaufmittels wurde so gewählt, dass darin 0,3 bzw. 0,7 g des Copolymers enthalten waren.)

Das Mahlgut und das Auflackgut werden gemischt und 5 min homogenisiert.

Die Viskosität wurde mit Solvesso 150 auf 100-120 s mit einem DIN 4-Becher eingestellt.

Nach 24 h wird der Lack mit einem Spiralrakel auf geprimerte Alubleche in einer Schichtdicke von 80 µm nass appliziert und 30 min mit einer PMT (Peak Metal Temperature) von 232 °C eingebrannt.

### Visuelle Beurteilung des Verlaufs:

| Verlaufmittel | Menge [g] | Verlauf* | Krater** | Glanz/Haze |
|---|---|---|---|---|
| | | | | 60°/20°/Haze |
| ohne Verlaufmittel Vergleich 3 | - | 5 | 4 | 94/49/455 |
| | 0.3 | 3-4 | 3 | 98/85/111 |
| | 0.7 | 3-4 | 2 | 98/81/152 |
| Vergleich 4 | 0.3 | 2-3 | 2 | 98/87/91 |
| | 0.7 | 2-3 | 2 | 98/87/89 |
| Beispiel 5 | 0.3 | 2 | 2 | 98/89/74 |
| | 0.7 | 3 | 2 | 98/89/77 |
| Beispiel 6 | 0.3 | 2-3 | 3 | 98/87/88 |
| | 0.7 | 2-3 | 3 | 98/88/83 |

| | | | | |
|---|---|---|---|---|
| * 1 = guter Verlauf; 5 = schlechter Verlauf; ** 1= keine Krater; 5 = viele Krater | | | | |

Der Glanz und der Haze wurde mit dem Messgerät "haze-gloss" der Firma Byk Gardner gemessen.

Mit den erfindungsgemäßen statistisch verzweigten Copolymeren konnte nicht nur der Verlauf im Vergleich zur linearen Verlaufmittelstruktur (Vergleichsbeispiel 3) verbessert werden, sondern auch die Verträglichkeit mit dem Lack, welches sich relativ zu den Vergleichsbeispielen in niedrigeren Haze-Werten ausdrückt.

### 4. Herstellung eines weißen Pulverlackes

### Zusammensetzung:

| | | |
|---|---|---|
| Uralac P5127 | 28,5 g | Polyesterharz, DSM |
| DER 663 UE | 28,5 g | Epoxyharz, Dow |
| Kronos 2160 | 28,5 g | Titandioxid, Kronos |
| Blancfixe | 14,2 g | Bariumsulfat, Sachtleben |
| Benzoin | 0,3 g | DSM |
| Verlaufmittel | 0,15 g | gemäß untenstehender Tabelle, berechnet auf den Festkörper des jeweiligen Verlaufmittels |

Die Verlaufmittel gemäß den Beispielen wurden als 10%ige Masterbatches in Uralac P5127 eingearbeitet. Dies wurde bei der Einwaage von Uralac P5127 berücksichtigt. Alle Komponenten wurden zusammen eingewogen und 2,5 min bei 2000 U/min in einem Hochgeschwindigkeitsmischer vorgemischt. Danach wurden die Mischungen in einem Doppelschnecken-Extruder bei 120°C extrudiert. Die entstandenen Stücke wurden gekühlt, gebrochen und in einer Stiftmühle gemahlen. Das entstandene Pulver wurde über ein 100 µm Sieb gegeben.

Die so entstandene Pulverlack-Mischung wurde dann elektrostatisch auf Aluminiumbleche (Größe: 152 mm x 76 mm, Dicke 0,5 mm) appliziert und die so beschichteten Bleche 11 Minuten bei 190°C ausgehärtet.

### Ergebnis:

| Schichtdicke: | | 80 - 90 µm | 60 - 70 µm |
|---|---|---|---|
| Verlaufmittel: | | | |
| | Vergleich 3 | 3 | 3 |
| | Beispiel 3 | 1 | 2 |
| | Beispiel 4 | 1 | 1 |

Bewertung der entstandenen Oberflächen:
1 = kraterfreie Oberfläche
2 = Oberfläche mit leichten Kratern
3 = Oberfläche mit deutlichen Kratern, zum Teil bis zum Untergrund

### 5. Herstellung eines Pulverklarlackes

### Zusammensetzung:

| | | |
|---|---|---|
| Uralac P865 | 94,1 g | Polyesterharz, DSM |
| Primid XL-552 | 4,9 g | Hydroxyalkylamidvernetzer, EMS-Chemie |
| Benzoin | 0,5 g | DSM |
| Verlaufmittel | 0,5 g | |

Die Verlaufmittel gemäß den Beispielen wurden als 10%ige Masterbatches in das Pulverlackharz eingearbeitet. Dies wurde bei der Einwaage des Harzes berücksichtigt. Der Masterbatch wird durch Aufschmelzen des entsprechenden Pulverlackharzes und Vermischen mit dem Verlaufmittel hergestellt. Nach dem Abkühlen wird die Masterbatchmischung zerkleinert.

Alle Komponenten wurden zusammen eingewogen und 2,5 min bei 1500 U/min in einem Hochgeschwindigkeitsmischer Mixaco Mischer Lab CM3 vorgemischt. Danach wurden die Mischungen in einem Doppelschnecken-Extruder Prism TSE 16 bei 120°C extrudiert. Die entstandene Harzschmelze wurde gekühlt, gebrochen und in einer Stiftmühle Retsch ZM 100 gemahlen. Das entstandene Pulver wurde über ein 100 µm Sieb gegeben.

Die so entstandene Pulverlack-Mischung wurde dann elektrostatisch auf Q-Panels Aluminium A-36 Bleche appliziert und die so beschichteten Bleche 14 Minuten bei 180°C im Umluftofen ausgehärtet.

Bewertung der entstandenen Oberfläche der Pulverlacke:

Der Verlauf wurde mit dem wave-scan DOI der Firma BYK-Gardner ermittelt, indem die Lange Welle und die Kurze Welle gemessen wurden.

### Ergebnis:

| Verlaufmittel | Schichtdicke µm | Wave Scan | |
|---|---|---|---|
| | | Lange Welle | Kurze Welle |
| Vergleich 3 | 40-50 | 33 | 29 |
| Vergleich 4 | 50 -60 | 30 | 23 |
| Beispiel 5 | 50 - 60 | 22 | 21 |

Die Ergebnisse zeigen, dass bei Verwendung des erfindungsgemäßen Polymers (Beispiel 5) als Verlaufmittel bessere Ergebnisse erzielt werden.

## Patentansprüche

1. Verfahren zur Herstellung eines statistisch verzweigten Copolymers, **dadurch gekennzeichnet, dass** die Komponenten
(a) 10 - 98,9 Mol-% mindestens eines Acrylsäureesters eines geradkettigen, verzweigten oder cyclischen C₁-C₂₂-Alkylmonoalkohols,
(b) 0,1 - 10 Mol-% mindestens eines mehrfach ethylenisch ungesättigten Monomers und
(c) gegebenenfalls ein oder mehrere einfach ethylenisch ungesättigte Monomere, die von Acrylsäureestern geradkettiger, verzweigter oder cyclischer C₁-C₂₂-Alkylmonoalkohole und von Verbindungen der Formel (I) verschieden sind,
in Gegenwart von
(d) 1 - 10 Mol-% mindestens einer Verbindung der Formel (I)
H₃C-CR^{a}R^{c}-CH₂-CR^{b}=CH₂ (I)
mit R^{a}, R^{b} unabhängig voneinander = Aryl, CN oder COOR¹ mit R¹ = H,
Alkyl, Aryl oder Aralkyl, und R^{c} = Alkyl, Aryl oder Aralkyl,
und in Gegenwart mindestens eines Initiators der radikalischen Polymerisation *in einer radikalischen Polymerisation* umgesetzt werden, wobei sich die angegebenen molaren Anteile der Komponenten (a), (b), (c) und (d) zu 100 Mol-% ergänzen und wobei der molare Anteil der Komponente (b) den molaren Anteil der Komponente (d) nicht übersteigt.

2. Verfahren nach Anspruch 1, **dadurch gekennzeichnet, dass** der molare Anteil der Komponente (a) 40 - 98,8 Mol-% beträgt.

3. Verfahren nach einem der Ansprüche 1 oder 2, **dadurch gekennzeichnet, dass** der molare Anteil der Komponente (b) 0,1 - 5 Mol-% beträgt.

4. Verfahren nach einem der Ansprüche 1 bis 3, **dadurch gekennzeichnet, dass** der molare Anteil der Komponente (c) 0,1 - 50 Mol-% beträgt.

5. Verfahren nach einem der Ansprüche 1 bis 4, **dadurch gekennzeichnet, dass** der molare Anteil der Komponente (d) 1 - 5 Mol-% beträgt.

6. Verfahren nach einem der Ansprüche 1 bis 5, **dadurch gekennzeichnet, dass** in der Komponente (d) 2,4-Diphenyl-4-methylpent-1-en eingesetzt wird.

7. Statistisch verzweigtes Copolymer, herstellbar gemäß dem Verfahren nach einem der Ansprüche 1 bis 6.

8. Copolymer nach Anspruch 7, **dadurch gekennzeichnet, dass** das zahlenmittlere Molekulargewicht des Copolymers 1500 - 200000 g/mol, bevorzugt 5000 - 75000 g/mol und besonders bevorzugt 7500 - 50000 g/mol beträgt.

9. Verwendung eines Copolymers gemäß einem der Ansprüche 7 bis 8 als Verlaufmittel in einem Beschichtungsstoff.

10. Verwendung nach Anspruch 9, **dadurch gekennzeichnet, dass** das Copolymer in dem Beschichtungsstoff in einem Anteil von 0,01 - 5 Gew.-%, bevorzugt 0,05 - 2 Gew.-%, besonders bevorzugt 0,1 - 1 Gew.-%, jeweils bezogen auf den gesamten Beschichtungsstoff, eingesetzt wird.

11. Verwendung nach einem der Ansprüche 9 oder 10, **dadurch gekennzeichnet, dass** der Beschichtungsstoff ein Pulverlack ist.

12. Beschichtungsstoff enthaltend mindestens ein Copolymer gemäß einem der Ansprüche 7 bis 8.

13. Beschichtungsstoff nach Anspruch 12, **dadurch gekennzeichnet, dass** der Beschichtungsstoff ein Pulverlack ist.

14. Verlaufmittel für einen Beschichtungsstoff, enthaltend mindestens ein Copolymer gemäß einem der Ansprüche 7 bis 8.

## Claims

1. A process for preparing a randomly branched copolymer, **characterized in that** the components
(a) 10 - 98.9 mol% of at least one acrylic ester of a linear, branched or cyclic C₁-C₂₂ alkyl monoalcohol,
(b) 0.1 - 10 mol% of at least one polyethylenically unsaturated monomer, and
(c) optionally one or more monoethylenically unsaturated monomers which are different from acrylic esters of linear, branched or cyclic C₁-C₂₂ alkyl monoalcohols and from compounds of the formula (I),
in the presence of
(d) 1 - 10 mol% of at least one compound of the formula (I)
H₃C-CR^{a}R^{c}-CH₂-CR^{b}=CH₂ (I)
where R^{a} and R^{b} independently of one another are aryl, CN or COOR¹
with R¹ = H, alkyl, aryl or aralkyl and R^{c} = alkyl, aryl or aralkyl,
and in the presence of at least one initiator of free-radical polymerization, are reacted *in a free-radical polymerization,* the stated molar fractions of components (a), (b), (c), and (d) adding up to 100 mol% and the molar fraction of component (b) not exceeding the molar fraction of component (d).

2. The process of claim 1, **characterized in that** the molar fraction of component (a) is 40 - 98.8 mol%.

3. The process of either of claims 1 and 2, **characterized in that** the molar fraction of component (b) is 0.1 - 5 mol%.

4. The process of any of claims 1 to 3, **characterized in that** the molar fraction of component (c) is 0.1 - 50 mol%.

5. The process of any of claims 1 to 4, **characterized in that** the molar fraction of component (d) is 1 - 5 mol%.

6. The process of any of claims 1 to 5, **characterized in that** 2,4-diphenyl-4-methylpent-1-ene is used in component (d).

7. A randomly branched copolymer preparable by the process of any of claims 1 to 6.

8. The copolymer of claim 7, **characterized in that** the number-average molecular weight of the copolymer is 1500 - 200 000 g/mol, preferably 5000 - 75 000 g/mol, and more preferably 7500 - 50 000 g/mol.

9. Use of a copolymer of either of claims 7 and 8 as a leveling agent in a coating material.

10. The use of claim 9, **characterized in that** the copolymer is used in the coating material in a fraction of 0.01% **-** 5% by weight, preferably 0.05% - 2% by weight, more preferably 0.1% - 1 % by weight, based in each case on the total coating material.

11. The use of either of claims 9 and 10, **characterized in that** the coating material is a powder coating material.

12. A coating material comprising at least one copolymer of either of claims 7 and 8.

13. The coating material of claim 12, **characterized in that** the coating material is a powder coating material.

14. A leveling agent for a coating material, comprising at least one copolymer of either of claims 7 and 8.

## Revendications

1. Procédé pour la fabrication d'un copolymère statistiquement ramifié, **caractérisé en ce que** les composants
(a) 10 - 98,9 % en mole d'au moins un ester d'acide acrylique d'un monoalcool d'alkyle en C₁-C₂₂ linéaire, ramifié ou cyclique,
(b) 0,1 - 10 % en mole d'au moins un monomère éthyléniquement polyinsaturé et
(c) le cas échéant un ou plusieurs monomères éthyléniquement insaturés différents des esters d'acide acrylique des monoalcools d'alkyle en C₁-C₂₂ linéaires, ramifiés ou cycliques et des composés de la formule (I), sont réagis *dans une polymérisation par radicaux,*
en présence de
(d) 1 - 10 % en mole d'au moins un composé de la formule (I)
H₃C-CR^{a}R^{c}-CH₂-CR^{b}=CH₂ (I)
ou R^{a}, R^{b} indépendamment l'un de l'autre sont aryle, CN ou COOR¹ avec R¹ = H, alkyle, aryle ou aralkyle, et R^{c} = alkyle, aryle ou aralkyle,
et en présence d'au moins un excitant de la polymérisation par radicaux, les proportions molaires des composants (a), (b), (c) et (d) ensemble résultant en 100 % en mole, et la proportion molaire du composant (b) n'excédant pas la proportion molaire du composant (d).

2. Procédé selon la revendication 1, **caractérisé en ce que** la proportion molaire du composant (a) est de 40 à 98,8 % en mole.

3. Procédé selon l'une quelconque des revendications 1 ou2, **caractérisé en ce que** la proportion molaire du composant (b) est de 0,1 à 5 % en mole.

4. Procédé selon l'une quelconque des revendications 1 à 3, **caractérisé en ce que** la proportion molaire du composant (c) est de 0,1 à 50 % en mole.

5. Procédé selon l'une quelconque des revendications 1 à 4, **caractérisé en ce que** la proportion molaire du composant (d) est de 1 à 5 % en mole.

6. Procédé selon l'une quelconque des revendications 1 à 5, **caractérisé en ce que** du 2,4-diphényl-4-méthylpent-1-ène est utilisé dans le composant (d).

7. Copolymère statistiquement ramifié qui peut être obtenu selon le procédé selon l'une quelconque des revendications 1 à 6.

8. Copolymère selon la revendication 7, **caractérisé en ce que** la masse molaire moyenne en nombre dudit copolymère est de 1500 - 200000 g/mol, de préférence 5000 - 75000 g/mol et plus préférablement 7500 - 50000 g/mol.

9. Utilisation d'un copolymère selon l'une quelconque des revendications 7 à 8 comme agent de nivellement dans une matière de revêtement.

10. Utilisation selon la revendication 9, **caractérisée en ce que** le copolymère est utilisé dans la matière de revêtement dans une proportion de 0,01 - 5 % en poids, de préférence 0,05 - 2 % en poids, plus préférablement de 0,1 - 1 % en poids, respectivement par rapport à la quantité totale de la matière de revêtement.

11. Utilisation selon l'une quelconque des revendications 9 ou 10, **caractérisée en ce que** la matière de revêtement est une peinture en poudre.

12. Matière de revêtement contenant au moins un copolymère selon l'une quelconque des revendications 7 à 8.

13. Matière de revêtement selon la revendication 12, **caractérisée en ce que** la matière de revêtement est une peinture en poudre.

14. Agent de nivellement pour une matière de revêtement, contenant au moins un copolymère selon l'une quelconque des revendications 7 à 8.
